# EUROPÄISCHE PATENTSCHRIFT

(11) **EP 4 146 494 B1**
(45) Veröffentlichungstag und Bekanntmachung des Hinweises auf die Patenterteilung: **21.10.2026**
(21) Anmeldenummer: 21719124.6
(22) Anmeldetag: 14.04.2021
(51) Int. Cl.: B60L 50/40, B60L 50/60, B60L 58/20

(54) **ELEKTRISCHES FAHRZEUG UND VERFAHREN ZUM BETREIBEN EINES ELEKTRISCHEN FAHRZEUGS**
ELECTRIC VEHICLE AND METHOD FOR OPERATING AN ELECTRIC VEHICLE
VÉHICULE ÉLECTRIQUE ET PROCÉDÉ DE FONCTIONNEMENT D'UN VÉHICULE ÉLECTRIQUE

(30) Priorität: 05.05.2020 DE 102020002674
(43) Veröffentlichungstag der Anmeldung: 15.03.2023
(73) Patentinhaber: SEW-EURODRIVE GmbH & Co. KG, 76646 Bruchsal (DE)
(72) Erfinder: HAUCK, Matthias, 68723 Schwetzingen (DE); LAMPERT, Christian, 76689 Karlsdorf-Neuthard (DE); FIALA, Michal, 73434 Aalen (DE)
(86) Internationale Anmeldenummer: PCT/EP2021/059703
(87) Internationale Veröffentlichungsnummer: WO 2021/223968

(56) Entgegenhaltungen:
- DE-A1- 102020 007 349
- US-A1- 2015 115 707
- US-A1- 2015 352 961
- US-A1- 2016 297 307
- US-B2- 8 400 106

## Beschreibung

Die Erfindung betrifft ein elektrisches Fahrzeug und ein Verfahren zum Betreiben eines elektrischen Fahrzeuges.

Als elektrisches Fahrzeug wird vorzugsweise ein fahrerloses, mobiles Assistenzsystem vorgesehen. Alternativ ist ein solches Fahrzeug auch als fahrerloses Transportfahrzeug (FTF) oder AGV (von englisch automated guided vehicle) bezeichenbar.

Aus der DE 10 2007 002 242 A1 ist ein fahrerloses Transportfahrzeug zum Transport von Lasten bekannt. Ein solcher Lasttransport ist als intralogistische Anwendung bezeichenbar. Das fahrerlose Transportfahrzeug wird induktiv mit Energie versorgt.

Aus der DE 195 45 544 A1 ist ein Flurförderbahnsystem bekannt, wobei die Fahrzeuge über Schleifleitungen mit elektrischer Energie versorgt werden. Um das Fahrzeug auch bei ausbleibender externer Energieversorgung betreiben zu können, wird vorgeschlagen, Elektrolyt- oder Goldcaps-Kondensatorspeicher, auch bekannt als Ultrakondensatoren, Superkondensatoren oder Doppelschichtkondensatoren, als elektrische Energiequelle zu verwenden.

Aus der US 6 265 851 B1 ist eine Ultrakondensatorstromversorgung für ein elektrisches Fahrzeug bekannt. Dieses elektrische Fahrzeug verfügt über zwei Energiespeichereinrichtungen, welche wahlweise für den Antrieb des Fahrzeuges verwendet werden können.

Aus der EP 2 419 364 A1 ist ein fahrerloses Transportsystem bekannt, welches zwei Energiespeichereinrichtungen - eine Doppelschichtkondensatoreinrichtung und eine Batterieeinrichtung - aufweist. Im Normalbetrieb versorgt die Doppelschichtkondensatoreinrichtung die Antriebseinrichtung, also den Motor, mit Energie. Im Notfall, also wenn die Spannung in der Doppelschichtkondensatoreinrichtung unter ein bestimmtes Niveau fällt, wird auf Batteriebetrieb umgeschaltet. Die Antriebseinrichtung wird dann ausschließlich von der Batterieeinrichtung mit Energie versorgt bis die Doppelschichtkondensatoreinrichtung an einer Ladestation wieder aufgeladen wird.

Aus der DE 10 2017 005 153 A1 ist ein Verfahren zum Betreiben eines elektrischen Fahrzeugs und ein elektrisches Fahrzeug bekannt, wobei dieses Fahrzeugzeug über eine Hybridspeichereinrichtung und eine Doppelschichtkondensatoreinrichtung verfügt. Beide Speichereinrichtungen können wahlweise die Fahrantriebseinrichtung mit Energie versorgen.

Aus der DE 10 2020 007 349 A1 ist ein Verfahren zum Betreiben eines elektrischen Fahrzeugs und ein elektrisches Fahrzeug bekannt.

Aus der US 2016 297 307 A1 ist ein elektrisches Fahrzeug mit einer Schnellladefunktion bekannt.

Aus der US 8 400 106 B2 eine Ladestation und ein dazugehöriges elektrisches Fahrzeug bekannt.

Aus der US 2015 352 961 A1 ist eine Leistungsversorgungsvorrichtung für Hybridbaumaschinen und ein entsprechendes Verfahren dafür bekannt.

Der Erfindung liegt die Aufgabe zugrunde, das Energiemanagement eines elektrischen Fahrzeugs, insbesondere eines fahrerlosen, mobilen Assistenzsystems, welches über zwei verschiedene Arten von Energiespeichern verfügt, weiterzubilden und zu vereinfachen. Hierbei sollen beide Energiespeicher zur Versorgung der Antriebsmotoren verwendbar sein.

Erfindungsgemäß wird die Aufgabe bei dem Fahrzeug nach den in Anspruch 1 angegebenen Merkmalen und bei dem Verfahren zum Betreiben eines elektrischen Fahrzeugs nach den in Anspruch 15 angegebenen Merkmalen gelöst.

Wichtige Merkmale der Erfindung bei dem elektrischen Fahrzeug, insbesondere fahrerlosen, mobilen Assistenzsystem für eine intralogistische Anwendung, sind, dass das Fahrzeug eine elektrische Fahrantriebseinrichtung für die Fahrbewegung, insbesondere Traktion, des Fahrzeugs, eine erste Energiespeichereinrichtung, welche insbesondere als wieder aufladbare Batteriespeichereinrichtung ausgebildet ist, eine zweite Energiespeichereinrichtung, insbesondere Doppelschichtkondensatoreinrichtung, welche schneller auf- und entladbar ist als die erste Energiespeichereinrichtung und einen bidirektionalen, insbesondere potentialgetrennten, Gleichspannungswandler, aufweist, wobei die elektrische Fahrantriebseinrichtung, der Gleichspannungswandler und die zweite Energiespeichereinrichtung über einen gemeinsamen Zwischenkreis miteinander verbunden sind, wobei der Zwischenkreis eine Zwischenkreisspannung aufweist, wobei die erste Energiespeichereinrichtung eine Speicherspannung aufweist und über den Gleichspannungswandler mit dem Zwischenkreis verbunden ist, wobei die Fahrantriebseinrichtung mittels der ersten Energiespeichereinrichtung und/oder mittels der zweiten Energiespeichereinrichtung über den Zwischenkreis mit Antriebsenergie versorgbar ist, wobei die Zwischenkreisspannung in einer ersten Wandlerrichtung mittels des Gleichspannungswandlers in die Speicherspannung wandelbar ist zur Aufladung der ersten Energiespeichereinrichtung, wobei die Speicherspannung in einer zweiten Wandlerrichtung mittels des Gleichspannungswandlers in die Zwischenkreisspannung wandelbar ist zur Entladung der ersten Energiespeichereinrichtung, wobei bei einer Aufladung der zweiten Energiespeichereinrichtung die erste Wandlerrichtung aktiviert ist, wobei bei einer Entladung der zweiten Energiespeichereinrichtung die erste Wandlerrichtung deaktiviert ist.

Von Vorteil ist dabei, dass die Fahrantriebseinrichtung durch zwei Energiespeichereinrichtungen mit Antriebsenergie versorgbar ist, wobei mittels der zweiten Energiespeichereinrichtung insbesondere Leistungsspitzen schnell abpufferbar sind. Die zweite Energiespeichereinrichtung ist vorteilhafterweise so dimensioniert, dass sie sich als primäre Energiequelle eignet, also hauptsächlich die Fahrantriebseinrichtung mit Energie versorgt. Die erste Energiespeichereinrichtung dient als sekundäre Energiequelle, um beispielsweise Reserveenergie bereitzustellen oder das Spannungsniveau im Zwischenkreis auf einem bestimmten Mindestwert zu halten. Auch ist die erste Energiespeichereinrichtung dazu geeignet, überschüssige Energie im Zwischenkreis, welche beispielsweise durch Rückspeisung der generatorisch betriebenen Fahrantriebseinrichtung vorhanden ist, aufzunehmen, falls beispielsweise die Kapazität der zweiten Energiespeichereinrichtung nicht ausreicht.

Dadurch, dass die Spannungswandlung vom Zwischenkreis zur ersten Energiespeichereinrichtung und umgekehrt mit Verlusten behaftet ist, soll die in der zweiten Energiespeichereinrichtung gespeicherte Energie ausschließlich der Fahrantriebseinrichtung zur Verfügung stehen. Das bedeutet, dass ein Umladen von der zweiten Energiespeichereinrichtung zur ersten Energiespeichereinrichtung vermieden werden soll. Mit anderen Worten soll die erste Energiespeichereinrichtung nur solche Energien aufnehmen, die nicht von der zweiten Energiespeichereinrichtung stammen. Dies ist beispielsweise dann der Fall, wenn die Fahrantriebseinrichtung generatorisch Energie in den Zwischenkreis zurückspeist. Die Auf- bzw. Entladung der zweiten Energiespeichereinrichtung ist beispielsweise durch eine Strommessung feststellbar, bei welcher die Stromflussrichtung bestimmt wird. Die Ausdrücke "aktiviert" und "deaktiviert" sind hierbei so zu verstehen, dass bei aktivierter Wandlerrichtung eine Spannungswandlung und damit Energieübertragung in dieser Richtung prinzipiell möglich ist. Ob sie tatsächlich auch stattfindet, wird dadurch nicht festgelegt. "Aktivierte Wandlerrichtung" heißt daher nicht zwingend, dass zu jedem Zeitpunkt auch wirklich eine Energieübertragung in diese Richtung stattfindet. Bei deaktivierter Wandlerrichtung ist entsprechend prinzipiell keine Spannungswandlung und damit Energieübertragung in diese Richtung möglich, auch wenn es aus irgendwelchen Gründen vorteilhaft oder wünschenswert wäre.

Die zweite Energiespeichereinrichtung ist vorteilhaft als Doppelschichtkondensatoreinrichtung ausgebildet und/oder die zweite Energiespeichereinrichtung ist vorteilhaft schneller auf- und entladbar als die erste Energiespeichereinrichtung. Eine Doppelschichtkondensatoreinrichtung zeichnet sich dadurch aus, dass sie in wenigen Sekunden aufladbar ist und vollständig entladbar bis Spannung gleich Null. Ihre Zyklenfestigkeit liegt im Bereich 1 Million, sie weist also eine sehr hohe Anzahl an Lade- / Entladezyklen auf. Sie eignet sich daher vorteilhafterweise, um elektrische Verbraucher des elektrischen Fahrzeugs mit Spitzenleistung zu versorgen.

Die erste Energiespeichereinrichtung ist vorteilhaft als Batteriespeichereinrichtung ausgebildet.

Die Batteriespeichereinrichtung ist langsamer auf- und entladbar als eine Doppelschichtkondensatoreinrichtung, welche eine vorteilhafte Ausführung für die zweite Energiespeichereinrichtung ist. Vorteilhaft weist die erste Energiespeichereinrichtung eine höhere Energiedichte auf und hat in der Praxis eine geringere Leistungsdichte und eine geringere Zahl an möglichen Lade- / Entladezyklen im Vergleich zur zweiten Energiespeichereinrichtung. Ein Beispiel für eine Batteriespeichereinrichtung ist eine Anordnung aus einem oder mehreren sekundären elektrochemischen Elementen, insbesondere auf Nickel und/oder Eisen-Basis. Ein solches sekundäres elektrochemisches Element umfasst eine negative Elektrode, eine positive Elektrode, einen porösen Separator, der die negative und die positive Elektrode voneinander trennt sowie einen, insbesondere wässrigen alkalischen, Elektrolyten, mit dem die Elektroden und der Separator getränkt sind. Ein solches sekundäres elektrochemisches Element auf Nickel und/oder Eisen-Basis ist wie ein Kondensator in der Lage, sehr schnell hohe Pulsströme zu liefern, es zeigt aber ansonsten eher ein Batterieverhalten, insbesondere gelten die Kondensator-Gleichungen Q = C U und W = ½ C U² für diese Batteriespeichereinrichtung nicht. Eine solche Batteriespeichereinrichtung weist eine höhere Zyklenfestigkeit auf. Diese Zyklenfestigkeit liegt im Bereich zwischen 1000 und 20000. Lade- und Entladezyklen sind also häufiger durchführbar, bevor die Leistungskriterien der Batteriespeichereinrichtung nicht mehr erfüllt werden. Darüber hinaus weist die Batteriespeichereinrichtung eine Überladestabilität und eine Tiefentladestabilität auf. Sie ist mit bis zu 15 C schnellladefähig. Ein anderes Beispiel für eine Batteriespeichereinrichtung ist ein Li-Ionen Akku.

Erfindungsgemäß weist das Fahrzeug eine mit dem Zwischenkreis verbundene Energieversorgungseinheit auf zur Energieversorgung des Zwischenkreises, wobei der Energieversorgungseinheit, insbesondere zeitabschnittsweise, Energie berührungslos oder kontaktbehaftet zuführbar ist.

Von Vorteil ist dabei, dass das Fahrzeug von extern mit Energie versorgbar ist. Die Energieversorgungseinheit ist beispielsweise als Ladegerät ausführbar, an das kontaktbehaftet ein Stecker anschließbar ist bei Stillstand des Fahrzeuges. Ebenso ist eine kontaktbehaftete Energieversorgung während der Fahrt des Fahrzeugs beispielsweise mittels Schleifleitungen ausführbar. Alternativ ist eine induktive Energieübertragung zwischen im Boden verlegten Primärleitern und einer Sekundärspule im Fahrzeug denkbar, welche an einen mit dem Zwischenkreis verbundenen Gleichrichter angeschlossen ist. Vorteilhafterweise bildet die Sekundärspule mit einem Kondensator einen Schwingkreis zur resonanten Energieübertragung bei einer einstellbaren Frequenz eines durch den Primärleiter fließenden Wechselstroms. Wie in DE 10 2017 005 153 A1 beschrieben ist damit eine berührungslose Energieversorgung des Fahrzeugs realisierbar. Die Energieversorgung ist dabei sowohl bei Stillstand des Fahrzeugs an Ladestationen durchführbar, wobei der Primärleiter als Spule ausgebildet ist, als auch während der Fahrt des Fahrzeugs, wobei in diesem Fall der Primärleiter als Linienleiter ausgebildet ist. Bei vorhandener externer Energieversorgung ist es vorteilhaft möglich, die erste Energiespeichereinrichtung aufzuladen.

Prinzipiell ist ein Umladen von der ersten Energiespeichereinrichtung zur zweiten Energiespeichereinrichtung möglich und erwünscht. Dies ist vor allem dann von Vorteil, wenn durch eine unvorhergesehene Störung, also im Notfall, der Doppelschichtkondensator entleert wird oder seine Spannung unter ein bestimmtes Spannungsniveau fällt. In diesem Fall ist es erfindungsgemäß möglich, dass die erste Energiespeichereinrichtung auch Energie für den Antrieb des Fahrzeugs zur Verfügung stellt. Ein weiterer denkbarer Fall für das Umladen von Energie aus dem ersten in den zweiten Energiespeicher ist ein Wiedereinschalten des Fahrzeugs nach längerer Pause, ohne dass das Ladegerät Energie liefern muss. Auch wenn bei einem Stillstand des Fahrzeugs, beispielsweise dem Parken, alle Verbraucher abgeschaltet werden, verringert sich der Energieinhalt der beiden Energiespeichereinrichtungen aufgrund von Selbstentladung. Diese Selbstentladung ist bei einer Doppelschichtkondensatoreinrichtung als beispielhafte Ausführung für die zweite Energiespeichereinrichtung um ein vielfaches größer als bei einer Batteriespeichereinrichtung als beispielhafte Ausführung für die erste Energiespeichereinrichtung. Deshalb kann die zweite Energiespeichereinrichtung schon nach wenigen Stunden oder wenigen Tagen Pause trotz Abschaltung der Verbraucher entleert sein. Mit einem Umladen von Energie aus der ersten in die zweite Energiespeichereinrichtung ist das Fahrzeug auch nach längerer Pause wieder in einen fahrbereiten Zustand versetzbar, ohne dass das Ladegerät Energie bereitstellen muss. Anders ausgedrückt muss das Fahrzeug nicht an einem Platz abgestellt oder geparkt werden, an dem eine externe Energiezufuhr vorhanden ist.

Die Energiespeichereinrichtungen sind vor allem dazu ausgelegt, das Fahrzeug während Betriebsphasen mit Energie zu versorgen, in denen das Fahrzeug über keine wie vorher beschriebene externe Energieversorgung verfügt. Das können Fahrten zwischen stationären Ladestationen oder Fahrten abseits der Primärleiter oder Schleifleitungen sein. Im Normalfall versorgt die zweite Energiespeichereinrichtung die Antriebe des Fahrzeugs. Deren Verbrauch hängt näherungsweise von der Fahrstrecke ohne externe Energieversorgung ab, die vorab gut zu planen ist, da die räumliche Anordnung der Ladeinfrastruktur bekannt ist.

Bei einer erfindungsgemäßen ersten Alternative umfasst die Energieversorgungseinheit eine regelbare Stromquelle und einen Stromregler, wobei ein Ausgangsstrom auf einen Sollwert regelbar ist, insbesondere wobei der Energieversorgungseinheit als Eingangsgröße die Zwischenkreisspannung zuführbar ist und insbesondere wobei die Energieversorgungseinheit deaktiviert ist, wenn die Zwischenkreisspannung größer als ein Zwischenkreisspannungsmaximalwert ist.

Von Vorteil ist dabei, dass dies insbesondere für eine induktiv gekoppelte Energieversorgungseinheit sehr einfach zu realisieren ist. Der Stromregler benötigt hierbei den Wert der Zwischenkreisspannung nicht zwingend. Es genügt, wenn die Energieversorgungseinheit einen Trennschalter umfasst, welcher die Energieübertragung in den Zwischenkreis unterbricht, sobald die Zwischenkreisspannung den Zwischenkreisspannungsmaximalwert überschreitet. Die Stromregelung erfolgt insbesondere unabhängig von der so realisierten Überspannungsüberwachung.

Bei einer erfindungsgemäßen zweiten Alternative umfasst die Energieversorgungseinheit eine regelbare Spannungsquelle und einen ersten Spannungsregler, wobei eine Ausgangsgleichspannung auf einen Sollwert für die Ausgangsgleichspannung regelbar ist, insbesondere wobei der Sollwert kleiner oder gleich einem Zwischenkreisspannungsmaximalwert ist.

Von Vorteil ist dabei, dass die Zwischenkreisspannung gezielt auf einem Spannungsniveau gehalten werden kann, welches eine Überlastung der mit dem Zwischenkreis verbundenen Verbraucher verhindert.

Bei einer vorteilhaften Ausgestaltung weist der Gleichspannungswandler einen zweiten Spannungsregler auf, wobei dem zweiten Spannungsregler ein Sollwert für die Zwischenkreisspannung vorgebbar ist, insbesondere wobei der Sollwert gleich einem Zwischenkreisspannungsgrenzwert ist.

Von Vorteil ist dabei, dass die Zwischenkreisspannung gezielt auf einem Spannungsniveau gehalten werden kann, welches individuell auf die intralogistische Anwendung anpassbar ist.

Bei einer vorteilhaften Ausgestaltung weist das Fahrzeug eine Steuereinrichtung zur Steuerung der Fahrbewegung des Fahrzeugs auf, wobei die Steuereinrichtung mit der ersten Energiespeichereinrichtung verbunden und über diese mit Energie versorgbar ist.

Von Vorteil ist dabei, dass die Steuereinrichtung, welche Bestandteil eines Fahrzeugbordnetzes sein kann, mittels der ersten Energiespeichereinrichtung mit einer konstanten Spannung versorgbar ist. Vorteilhafte Spannungen sind 12V, 24V, 48V oder 96V.

Falls der Gleichspannungswandler potentialgetrennt ausgeführt ist, ergibt sich eine sichere und einfache Trennung zwischen der Fahrzeugelektronik und der Antriebseinrichtung.

Bei einer vorteilhaften Ausgestaltung ist die zweite Energiespeichereinrichtung direkt mit dem Zwischenkreis verbunden, wobei ein zeitlicher Gradient der Zwischenkreisspannung mittels eines Spannungsmessers, insbesondere kontinuierlich oder in diskreten Zeitschritten, messbar ist, wobei die erste Wandlerrichtung aktiviert ist, wenn der Gradient positiv oder Null ist, wobei die erste Wandlerrichtung deaktiviert ist, wenn der Gradient negativ ist.

Von Vorteil ist dabei, dass auf einfache Weise feststellbar ist, ob die zweite Energiespeichereinrichtung aufgeladen oder entladen wird. Darüber hinaus ist dadurch eine Strommessung einsparbar, mit welcher man normalerweise die Auf- bzw. Entladung bestimmen würde. Da die zweite Energiespeichereinrichtung eine Kondensatorcharakteristik aufweist, gilt für die Energie E₂ in der zweiten Energiespeichereinrichtung: E₂ = ½ C₂ U₂², wobei C₂ die Kapazität und U₂ die Spannung der zweiten Energiespeichereinrichtung ist. Für den Ladestrom I₂, also denjenigen Strom, der zu einer Erhöhung von E₂ und damit zu einer Aufladung der zweiten Energiespeichereinrichtung führt, gilt: I₂ = C₂ * dU₂/dt. Wenn die zweite Energiespeichereinrichtung direkt mit dem Zwischenkreis verbunden ist, gilt U₂ = U_{ZK}, mit der Zwischenkreisspannung U_{ZK}. Daher ist der Ladestrom I₂ proportional zu dem zeitlichen Spannungsgradienten dU_{ZK}/dt der Zwischenkreisspannung. Ein positiver Gradient lässt daher auf eine Aufladung der zweiten Energiespeichereinrichtung schließen, während ein negativer Gradient eine Entladung der zweiten Energiespeichereinrichtung anzeigt. Wenn der Gradient gleich Null ist, findet weder eine Auf- noch eine Entladung statt.

Bei einer vorteilhaften Ausgestaltung ist der Gleichspannungswandler derart eingerichtet, dass die zweite Wandlerrichtung aktiviert ist zur Stützung der Zwischenkreisspannung, wenn die Zwischenkreisspannung kleiner als ein Zwischenkreisspannungsgrenzwert ist und wenn die Speicherspannung größer als eine Minimalspeicherspannung ist.

Von Vorteil ist dabei, dass die Zwischenkreisspannung immer auf einer definierbaren Mindestspannung mit dem Wert des Zwischenkreisspannungsgrenzwertes gehalten werden kann, solange genügend Energie in der ersten Energiespeichereinrichtung vorhanden ist, also die Spannung in der ersten Energiespeichereinrichtung über einer definierbaren Minimalspeicherspannung liegt.

Bei einer vorteilhaften Ausgestaltung ist der Gleichspannungswandler derart eingerichtet, dass die zweite Wandlerrichtung deaktiviert ist, wenn die Zwischenkreisspannung größer als der Zwischenkreisspannungsgrenzwert ist und/oder wenn die Speicherspannung kleiner als eine Minimalspeicherspannung ist.

Von Vorteil ist dabei, dass die Zwischenkreisspannung nicht noch unnötigerweise weiter durch den Gleichspannungswandler erhöht wird, wenn diese bereits den

Zwischenkreisspannungsgrenzwert überschritten hat. Dadurch ist die Sicherheit erhöht und eine Überladung der zweiten Energiespeichereinrichtung wird vermieden. Darüber hinaus wird nicht unnötigerweise Energie aus der ersten Energiespeichereinrichtung in den Zwischenkreis überführt. Zudem wird eine Entladung der ersten Energiespeichereinrichtung unterhalb einer Minimalspeicherspannung verhindert.

Bei einer vorteilhaften Ausgestaltung ist der Gleichspannungswandler derart eingerichtet, dass die erste Wandlerrichtung aktiviert ist zur Aufladung der ersten Energiespeichereinrichtung, - wenn die Zwischenkreisspannung größer als der Zwischenkreisspannungsgrenzwert ist und wenn die Speicherspannung kleiner als eine Maximalspeicherspannung ist.

Von Vorteil ist dabei, dass überschüssige Energie im Zwischenkreis aufnehmbar ist, wenn die Zwischenkreisspannung über dem Zwischenkreisspannungsgrenzwert liegt. Eine Aufladung der ersten Energiespeichereinrichtung erfolgt jedoch nur bei positivem Spannungsgradienten im Zwischenkreis.

Bei einer vorteilhaften Ausgestaltung ist der Gleichspannungswandler derart eingerichtet, dass die erste Wandlerrichtung deaktiviert ist, wenn die Speicherspannung größer als eine Maximalspeicherspannung ist und/oder wenn die Zwischenkreisspannung kleiner als der Zwischenkreisspannungsgrenzwert ist.

Von Vorteil ist dabei, dass eine Überladung der ersten Energiespeichereinrichtung vermieden wird, wenn die Spannung über der Maximalspeicherspannung liegt. Darüber hinaus wird eine Aufladung der ersten Energiespeichereinrichtung verhindert, wenn die Spannung im Zwischenkreis unterhalt des Zwischenkreisspannungsgrenzwertes liegt.

Bei einer vorteilhaften Ausgestaltung ist die zweite Energiespeichereinrichtung derart ausgelegt, dass mehr Strom aufnehmbar ist als durch die Energieversorgungseinheit bereitstellbar ist.

Von Vorteil ist dabei, dass die Energieversorgungseinheit sehr einfach vor Überlastung geschützt werden kann. Hierzu wird lediglich eine Spannungsbegrenzung benötigt, welche bei Erreichen der maximal zulässigen Betriebsspannung der zweiten Energiespeichereinrichtung die Energieversorgungseinheit deaktiviert.

Bei einer vorteilhaften Ausgestaltung ist die erste Energiespeichereinrichtung derart trennbar am elektrischen Fahrzeug angeordnet, dass ein Austausch der ersten Energiespeichereinrichtung ermöglicht ist.

Von Vorteil ist dabei, dass bei Verschleiß der ersten Energiespeichereinrichtung diese einfach austauschbar ist. Die erste Energiespeichereinrichtung ist also nicht fest im Fahrzeug montiert oder integriert, sondern lösbar am Fahrzeug angebaut. Insbesondere bei einer Verwendung von Schutzkleinspannung für die erste Energiespeichereinrichtung ergibt sich der Vorteil, dass die erste Energiespeichereinrichtung auch von einer nicht entsprechend ausgebildeten Person einfach ausgetauscht werden kann. Dies ist insbesondere dann vorteilhaft, wenn die erste Energiespeichereinrichtung nicht auf die Lebensdauer des Fahrzeuges ausgelegt wird und daher ein Verschleißteil ist.

Bei einer vorteilhaften Ausgestaltung ist an der ersten Energiespeichereinrichtung mittels einer Strommessung und/oder Spannungsmessung ein Überspannungsschutz und/oder Unterspannungsschutz und/oder Überstromschutz bereitgestellt und/oder an der ersten Energiespeichereinrichtung mittels einer Temperaturmessung ein Übertemperaturschutz bereitgestellt ist und/oder an der zweiten Energiespeichereinrichtung mittels einer Strommessung und/oder Spannungsmessung ein Überspannungsschutz und/oder Überstromschutz bereitgestellt und /oder an der zweiten Energiespeichereinrichtung mittels einer Temperaturmessung ein Übertemperaturschutz bereitgestellt.

Von Vorteil ist dabei, dass die Sicherheit erhöht ist und eine Beschädigung der Energiespeichereinrichtungen verhindert wird.

Wichtige Merkmale der Erfindung bei dem Verfahren zum Betreiben eines elektrischen Fahrzeugs, insbesondere eines fahrerlosen, mobilen Assistenzsystems für eine intralogistische Anwendung, sind, dass das Fahrzeug eine elektrische Fahrantriebseinrichtung für die Fahrbewegung, insbesondere Traktion, des Fahrzeugs, eine erste Energiespeichereinrichtung, welche insbesondere als wieder aufladbare Batteriespeichereinrichtung ausgebildet ist, eine zweite Energiespeichereinrichtung, insbesondere Doppelschichtkondensatoreinrichtung, welche schneller auf- und entladbar ist als die erste Energiespeichereinrichtung und einen bidirektionalen, insbesondere potentialgetrennten, Gleichspannungswandler aufweist, wobei die elektrische Fahrantriebseinrichtung, der Gleichspannungswandler und die zweite Energiespeichereinrichtung über einen gemeinsamen Zwischenkreis miteinander verbunden sind, wobei der Zwischenkreis eine Zwischenkreisspannung aufweist, wobei die erste Energiespeichereinrichtung eine Speicherspannung aufweist und über den Gleichspannungswandler mit dem Zwischenkreis verbunden ist, wobei die Fahrantriebseinrichtung mittels der ersten Energiespeichereinrichtung und/oder mittels der zweiten Energiespeichereinrichtung über den Zwischenkreis mit Antriebsenergie versorgt wird, wobei die Zwischenkreisspannung in einer ersten Wandlerrichtung mittels des Gleichspannungswandlers in die Speicherspannung gewandelt wird zur Aufladung der ersten Energiespeichereinrichtung, wobei die Speicherspannung in einer zweiten Wandlerrichtung mittels des Gleichspannungswandlers in die Zwischenkreisspannung gewandelt wird zur Entladung der ersten Energiespeichereinrichtung, wobei bei einer Aufladung der zweiten Energiespeichereinrichtung die erste Wandlerrichtung aktiviert wird, wobei bei einer Entladung der zweiten Energiespeichereinrichtung die erste Wandlerrichtung deaktiviert wird.

Es ergeben sich hierbei dieselben Vorteile wie bereits für das elektrische Fahrzeug genannt. Weitere Vorteile ergeben sich aus den Unteransprüchen.

Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe. Die Erfindung wird in den Ansprüchen definiert.

Die Erfindung wird nun anhand von Abbildungen näher erläutert:

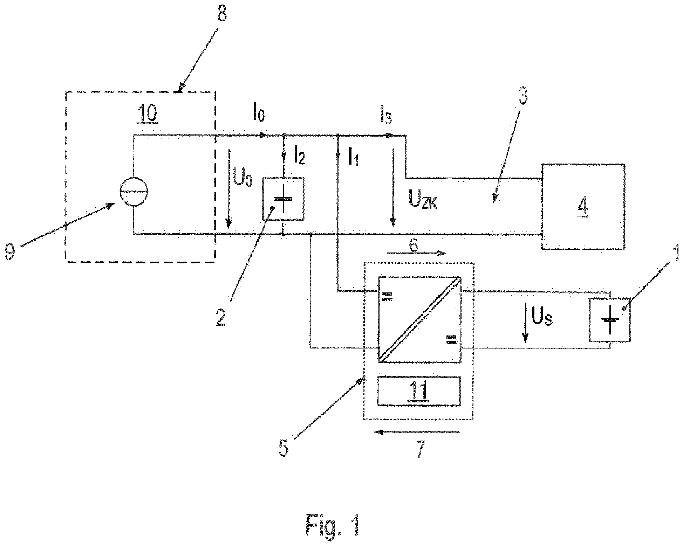

In der Figur 1 ist ein erfindungsgemäßes Fahrzeug schematisch gezeigt.

Figur 1 zeigt schematisch die Komponenten eines erfindungsgemäßen Fahrzeugs, welche für das Energiemanagement verantwortlich sind. Das Fahrzeug, welches vorteilhaft als mobiles Assistenzsystem einer intralogistischen Anwendung ausgebildet ist, verfügt über zwei Energiespeichereinrichtungen 1, 2. Im vorliegenden Ausführungsbeispiel wird ein Batteriespeicher 1, beispielsweise ein sekundäres elektrochemisches Element, und ein Doppelschichtkondensator 2 verwendet. Es sind auch modular aufgebaute Energiespeichereinrichtungen denkbar, welche jeweils aus mehreren gleichartigen oder verschiedenen Energiespeichern bestehen. Wesentlich ist lediglich, dass der zweite Energiespeicher 2 schneller auf- und entladbar ist als der erste Energiespeicher 1.

Die beiden Energiespeicher 1, 2 sind dazu ausgelegt, den Fahrantrieb 4 des Fahrzeugs mit der notwendigen Antriebsenergie zu versorgen. Hierzu sind die beiden Energiespeicher 1,2 über einen Zwischenkreis 3 mit dem Fahrantrieb 4 verbunden. Während der Doppelschichtkondensator direkt mit dem Zwischenkreis 3 verbunden ist, ist der Batteriespeicher 1 über einen vorteilhafterweise potentialgetrennten Gleichspannungswandler 5 an den Zwischenkreis 3 angeschlossen. Der Fahrantrieb 4 ist beispielsweise als 3-Phasen-Drehstrommotor mit vorgeschaltetem 3-Phasen-Wechselrichter ausführbar ist. Der Wechselrichter wandelt dabei in bekannter Weise die im Zwischenkreis 3 herrschende Zwischenkreisspannung U_{ZK} in eine 3-Phasen-Wechselspannung um, mit welcher der Drehstrommotor, beispielsweise ein Käfigläufer, betrieben wird. Der Fahrantrieb 4 kann auch mehrere Motoren aufweisen, welche jeweils von einem eigenen oder einem gemeinsamen Wechselrichter betreibbar sind. Darüber hinaus ist der Wechselrichter auch rückspeisefähig ausführbar, so dass bei generatorischem Betrieb des oder der Antriebsmotoren eine Rückspeisung von Energie in den Zwischenkreis 3 möglich ist. Neben Antriebseinrichtungen zur Traktion des Fahrzeugs sind auch andere Verbraucher an den Zwischenkreis 3 anschließbar, beispielsweise Hubeinrichtungen zur Aufnahme einer Last oder Handlingseinrichtungen zur Bewegung eines Objektes, beispielsweise ein Roboterarm. Über den Zwischenkreis 3 ist also ein Austausch von Energie zwischen den Energiespeichern 1, 2 und den Verbrauchern 4 möglich. Die Zwischenkreisspannung U_{ZK} liegt vorteilhafterweise im Bereich von Niederspannungen, beispielsweise zwischen 120V und 600V.

Da der Doppelschichtkondensator 2 direkt an den Zwischenkreis 3 angeschlossen ist, herrscht im Doppelschichtkondensator 2 immer im Wesentlichen die Zwischenkreisspannung U_{ZK}. Zum Schutz des Doppelschichtkondensators 2 ist es beispielsweise möglich, einen Schalter vorzusehen, welcher die Verbindung zwischen Doppelschichtkondensator 2 und Zwischenkreis 3 unterbrechen kann, beispielsweise, weil die Zwischenkreisspannung U_{ZK} zu hoch oder zu niedrig ist oder um den Doppelschichtkondensator vor einem zu hohen Ladestrom I₂ zu schützen.

Der Batteriespeicher 1 wird vorteilhafterweise auf einem niedrigeren Spannungsniveau betrieben. Die Speicherspannung U_{S} ist vorteilhafterweise eine Kleinspannung, vorteilhaft 12V, 24V, 48V oder 96V. Um die Sicherheit zu erhöhen ist es vorteilhaft, die beiden Spannungsniveaus U_{ZK} und U_{S} galvanisch voneinander zu trennen. Dies ist mittels eines potentialgetrennten Gleichspannungswandlers 5 einfach realisierbar. Wesentlich ist, dass der Gleichspannungswandler 5 bidirektional ausgeführt ist. Hierzu besitzt der Gleichspannungswandler eine erste Wandlerrichtung 6, welche die Zwischenkreisspannung U_{ZK} in die Speicherspannung U_{S} wandelt, und eine zweite Wandlerrichtung 7, welche die Speicherspannung U_{S} in die Zwischenkreisspannung U_{ZK} wandelt. Die beiden Wandlerrichtungen ist einzeln aktivierbar bzw. deaktivierbar. Vorteilhafterweise hängt diese Aktivierung bzw. Deaktivierung von dem Wert der Zwischenkreisspannung U_{ZK} und/oder dem Wert der Speicherspannung U_{S} ab, wie nachfolgend noch näher erläutert wird. Vorteilhafterweise verfügt das Fahrzeug über eine nicht gezeigte Steuerung, welche die Fahrbewegung des Fahrzeuges steuert. Diese Steuerung ist vorteilhafterweise elektrisch mit dem Batteriespeicher 1 verbunden und über diesen mit Energie versorgbar. Der Batteriespeicher ist daher eingerichtet, sowohl den Fahrantrieb 4 als auch die Steuerung mit Energie zu versorgen. Die Steuerung ist vorteilhafterweise kommunikativ mit dem Gleichspannungswandler 5 und dessen Wandlersteuerung 11 verbunden, um selektiv die Aktivierung bzw. Deaktivierung der beiden Wandlerrichtungen 6, 7 zu steuern. Alternativ ist es möglich, dass die Wandlersteuerung 11 selbstständig die Aktivierung bzw. Deaktivierung der beiden Wandlerrichtungen 6, 7 steuert.

Vorteilhafterweise ist dem Fahrzeug Energie von extern zuführbar. Hierzu weist das Fahrzeug eine Energieversorgungseinheit 8 auf, welche in diesem Ausführungsbeispiel einen Stromregler 10 und eine regelbare Stromquelle 9 umfasst. Die Energieversorgungseinheit 8 ist auch als Ladegerät oder Einspeisung bezeichenbar. Der Stromregler 10 regelt den Ausgangsstrom I₀ des Ladegeräts 8 und steuert damit die Ausgangsgleichspannung U₀. Das Ladegerät 8 ist ohne Spannungswandler mit dem Zwischenkreis 3 verbunden. Die Ausgangsgleichspannung U₀ entspricht in diesem Ausführungsbeispiel im Wesentlichen der Zwischenkreisspannung U_{ZK}. Zum Schutz der Verbraucher oder des Ladegerätes ist es möglich, dass zwischen Ladegerät 8 und Zwischenkreis 3 ein steuerbarer Schalter angeordnet ist zur Trennung des Ladegerätes 8 vom Zwischenkreis 3. Bei geöffnetem Schalter sind die beiden Spannungen dann unterschiedlich. Die Trennung erfolgt vorteilhaft bei Überschreiten der Zwischenkreisspannung U_{ZK} über einen definierbaren Zwischenkreisspannungsmaximalwert U_{ZK,max}. Die Trennung wird vorteilhaft vom Ladegerät 8 ausgeslöst, welcher hierzu der aktuelle Messwert der Zwischenkreisspannung U_{ZK} zuführbar ist. In vorliegendem Ausführungsbeispiel wird das Fahrzeug induktiv mit Energie versorgt.

In vorliegendem Ausführungsbeispiel teilt sich der Ausgangsstrom I₀, auch Einspeisestrom genannt, in die drei Ladeströme I₁, I₂ und I₃ auf. Die Ströme I1, I2 und I3 sind dabei so definiert, dass positive Werte zu einer Aufladung der Energiespeicher 1, 2 bzw. zu einer Leistungsübertragung zum Fahrantrieb 4 führen. Bei einer Einspeisung von Energie in den Zwischenkreis durch die Komponenten 1, 2, 4 sind die Werte der Ströme entsprechend negativ.

Zum Schutz der einzelnen Komponenten ist es vorteilhaft, die einzelnen Ströme mittels Strommessern zu erfassen und bei Überlastung die Komponenten vom Zwischenkreis zu trennen. Darüber hinaus sind vorteilhaft Temperatursensoren an den Energiespeichern 1, 2 angebracht, um sie bei thermischer Überlast ebenfalls vom Zwischenkreis 3 zu trennen. Schließlich sind Spannungsmesser an den einzelnen Komponenten anbringbar, um sie vor Überspannungen oder zu niedrigen Versorgungsspannungen zu schützen. Auf diese Weise sind Überstrom-, Überspannungs-, Unterspannungs- und Übertemperaturschutz ausführbar.

Wesentlicher Erfindungsgedanke ist, dass der Doppelschichtkondensator 2 als primärer Energiespeicher hauptsächlich die Antriebsenergie für den Fahrantrieb 4 zur Verfügung stellt. Energie, die einmal durch den Ladestrom I₂ in den Doppelschichtkondensator 2 übertragen wurde, soll bei einer Entladung des Doppelschichtkondensators, also bei negativen Strömen I₂, ausschließlich dem Fahrantrieb 4 zur Verfügung stehen. Ein Umladen von Energie vom Doppelschichtkondensator 2 zum Batteriespeicher 1, also ein positiver Ladestrom I₁ bei negativem Ladestrom I₂, soll verhindert werden.

Erfindungsgemäß wird ein solcher Umladevorgang dadurch verhindert, dass die erste Wandlerrichtung 6 deaktiviert ist, wenn der Doppelschichtkondensator 2 entladen wird, also bei negativen Ladeströmen I₂. Umgekehrt wird die erste Wandlerrichtung 6, insbesondere nur dann, aktiviert, wenn der Doppelschichtkondensator aufgeladen wird, also bei positiven Ladeströmen I₂. Um auf einfache Weise zu bestimmen, ob der Ladestrom I₂ positiv oder negativ ist, wird in einer bevorzugten Ausführungsform die Tatsache ausgenutzt, dass die Spannung des Doppelschichtkondensators im Wesentlichen der Zwischenkreisspannung U_{ZK} entspricht. Steigt die Zwischenkreisspannung U_{ZK} an, beispielsweise, weil eine externe Energieversorgung vorhanden ist oder weil der Fahrantrieb 4 Energie in den Zwischenkreis 3 zurückspeist, so steigt auch die Spannung im Doppelschichtkondensator 2, was einen positiven Ladestrom I₂ hervorruft. Anstatt eine direkte Messung des Stromes I₂ vorzunehmen, wird der Verlauf der Zwischenkreisspannung U_{ZK} als Kriterium für die Aktivierung bzw. Deaktivierung der Wandlerrichtungen 6,7 verwendet. Der Wert der Zwischenkreisspannung U_{ZK} ist üblicherweise ohnehin notwendig für die Steuerung des Fahrantriebs und daher kann auf eine zusätzliche Strommessung des Ladestroms I₂ verzichtet werden.

Die Aktivierung bzw. Deaktivierung der Wandlerrichtungen 6, 7 wird vorteilhaft durch den zeitlichen Gradienten der dU_{ZK}/dt der Zwischenkreisspannung U_{ZK} bestimmt. Bei positivem oder verschwindendem Gradienten (dU_{ZK}/dt ≥ 0) wird die erste Wandlerrichtung 6 aktiviert, wobei bei negativem Gradienten (dU_{ZK}/dt < 0) die erste Wandlerrichtung 6 deaktiviert wird.

Die Zwischenkreisspannung U_{ZK} nimmt vorteilhafterweise nur Werte ein, welche größer als ein Mindestwert U_{ZK,min} und kleiner als ein Maximalwert U_{ZK,max} sind, also U_{ZK,min}< U_{ZK} < U_{ZK,max}. Beispielhafte Werte sind U_{ZK,min} = 120V und U_{ZK,max} = 600V. Sollte die Zwischenkreisspannung U_{ZK} unterhalb des Mindestwertes U_{ZK,min} fallen, kann beispielsweise der Doppelschichtkondensator 2 vom Zwischenkreis 3 getrennt werden, um eine vollständige Entladung zu vermeiden. Sollte dagegen die Zwischenkreisspannung U_{ZK} über den Maximalwert U_{ZK,max} steigen und beide Energiespeicher bereits voll geladen sein, so kann beispielsweise durch einen Bremschopper im Zwischenkreis 3 eine Überlastung vermieden werden.

Für bestimmte intralogistische Anwendungen kann es vorteilhaft sein, dass die Spannung im Zwischenkreis 3 und somit im Doppelschichtkondensator 2 nicht unter einen definierbaren Zwischenkreisspannungsgrenzwert kurz Grenzwert U_{ZK,G}, fällt, welcher zwischen Mindestwert und Maximalwert liegt, also U_{ZK,min}< U_{ZK,G} < U_{ZK,max}. Ein beispielhafter Wert ist U_{ZK,G} = 200V. Dies wird dadurch erreicht, dass bei Unterschreitung der Zwischenkreisspannung U_{ZK} unter den Grenzwert U_{ZK,G} die zweite Wandlerrichtung 7 aktiviert ist zur Aufladung des Doppelschichtkondensators 2. Dies ist jedoch nur möglich, so lange die Speicherspannung U_{S} des Batteriespeichers 1 oberhalb einer Minimalspeicherspannung U_{S,min} liegt. Vorteilhaft wird die zweite Wandlerrichtung 7 deaktiviert, wenn die Zwischenkreisspannung U_{ZK} größer als der Grenzwert U_{ZK,G} ist und/oder wenn die Speicherspannung U_{S} kleiner als die Minimalspeicherspannung U_{S,min} ist.

Die Aufladung des Batteriespeichers ist nur für dU_{ZK}/dt ≥ 0 möglich. Darüber hinaus ist es vorteilhaft die erste Wandlerrichtung 6 auch nur dann zu aktivieren, also eine Aufladung überhaupt erst zu ermöglichen, wenn die Zwischenkreisspannung U_{ZK} größer als der Grenzwert U_{ZK,G} ist und wenn die Speicherspannung U_{S} kleiner als eine Maximalspeicherspannung U_{S,max} ist. Umgekehrt ist es vorteilhaft, die erste Wandlerrichtung 6 zu deaktivieren, wenn die Speicherspannung U_{S} eine Maximalspeicherspannung U_{S,max} erreicht und/oder wenn die Zwischenkreisspannung U_{ZK} kleiner als der Grenzwert U_{ZK,G} ist.

Die Entscheidung, ob und wann in vorliegendem Ausführungsbeispiel die Wandlerrichtungen 6, 7 aktiviert bzw. deaktiviert werden, ist vorteilhaft durch die Wandlersteuerung 11 dadurch treffbar, dass der Wandlersteuerung 11 der aktuelle Wert sowie der zeitliche Verlauf der Zwischenkreisspannung U_{ZK} zugeführt wird. Es ist alternativ oder zusätzlich möglich, dass die Wandlersteuerung 11 einen Spannungsregler umfasst, wobei dem Spannungsregler als Sollwert ein Wert für die Zwischenkreisspannung U_{ZK,soll} vorgegeben wird. Dieser Sollwert ist vorteilhafterweise gleich dem oben genannten Grenzwert U_{ZK,G}. Der Gleichspannungswandler 5 wird daher versuchen, die Zwischenkreisspannung U_{ZK} auf das Niveau des Grenzwertes U_{ZK,G} hinzuregeln. Diese Regelung erfolgt immer unter der Vorgabe, dass bei dU_{ZK}/dt < 0 die erste Wandlerrichtung 6 deaktiviert wird und deaktiviert bleibt.

Im in der Figur 1 gezeigten Ausführungsbeispiel umfasst das Ladegerät 8 einen Stromregler 10 und eine regelbare Stromquelle 9. Die Regelung des Ausgangsstroms I₀ erfolgt dabei vorteilhaft in der Weise, dass bei Erreichen des oben genannten Maximalwertes U_{ZK,max} die Einspeisung unterbrochen wird. Dem Stromregler 10 wird daher ebenfalls der aktuelle Wert der Zwischenkreisspannung U_{ZK} übermittelt. Alternativ hierzu ist es denkbar, dass das Ladegerät 8 eine regelbare Spannungsquelle und einen Spannungsregler umfasst, wobei die Ausgangsspannung U₀ auf einen Sollwert U_{0,soll} für die Ausgangsspannung geregelt wird. Dieser Sollwert ist vorteilhaft gleich dem oben genannten Maximalwert U_{ZK,max}. Es sind jedoch auch kleinere Werte denkbar, die größer als der Grenzwert U_{ZK,G} sind. In jedem Fall ist sichergestellt, dass für den Fall, wenn das Ladegerät extern mit Energie versorgt wird, das Ladegerät 8 den Doppelschichtkondensator 2 auflädt und/oder aufgeladen hält. Ebenso lädt der Batteriespeicher, wenn nötig den Doppelschichtkondensator 2 auf oder hält ihn aufgeladen.

### Bezugszeichenliste

- 1: Batteriespeicher
- 2: Doppelschichtkondensator
- 3: Zwischenkreis
- 4: Fahrantrieb
- 5: Gleichspannungswandler
- 6: Erste Wandlerrichtung
- 7: Zweite Wandlerrichtung
- 8: Einspeisung
- 9: Regelbare Stromquelle
- 10: Stromregler
- 11: Wandlersteuerung
- I₀: Ausgangsstrom
- I₁: Ladestrom des ersten Energiespeichers
- I₂: Ladestrom des zweiten Energiespeichers
- I₃: Laststrom des Fahrantriebs
- U_{ZK}: Zwischenkreisspannung
- U_{S}: Speicherspannung
- U₀: Einspeisespannung

## Patentansprüche

1. Elektrisches Fahrzeug aufweisend:
eine elektrische Fahrantriebseinrichtung (4) für die Fahrbewegung des Fahrzeugs,
eine erste Energiespeichereinrichtung (1),
eine zweite Energiespeichereinrichtung (2), welche schneller auf- und entladbar ist als die erste Energiespeichereinrichtung (1) und
einen bidirektionalen Gleichspannungswandler (5),
wobei die elektrische Fahrantriebseinrichtung (4), der Gleichspannungswandler (5) und die zweite Energiespeichereinrichtung (2) über einen gemeinsamen Zwischenkreis (3) miteinander verbunden sind, wobei der Zwischenkreis (3) eine Zwischenkreisspannung (U_{ZK}) aufweist,
wobei die erste Energiespeichereinrichtung (1) eine Speicherspannung (U_{S}) aufweist und über den Gleichspannungswandler (5) mit dem Zwischenkreis (3) verbunden ist,
wobei die Fahrantriebseinrichtung (4) mittels der ersten Energiespeichereinrichtung (1) und/oder mittels der zweiten Energiespeichereinrichtung (2) über den Zwischenkreis (3) mit Antriebsenergie versorgbar ist,
wobei die Zwischenkreisspannung (U_{ZK}) in einer ersten Wandlerrichtung (6) mittels des Gleichspannungswandlers (5) in die Speicherspannung (U_{S}) wandelbar ist zur Aufladung der ersten Energiespeichereinrichtung (1),
wobei die Speicherspannung (U_{S}) in einer zweiten Wandlerrichtung (7) mittels des Gleichspannungswandlers (5) in die Zwischenkreisspannung (U_{ZK}) wandelbar ist zur Entladung der ersten Energiespeichereinrichtung (1),
wobei bei einer Aufladung der zweiten Energiespeichereinrichtung (2) die erste Wandlerrichtung (6) aktiviert ist,
wobei bei einer Entladung der zweiten Energiespeichereinrichtung (2) die erste Wandlerrichtung (6) deaktiviert ist,
**dadurch gekennzeichnet, dass**
das Fahrzeug eine mit dem Zwischenkreis (3) verbundene Energieversorgungseinheit (8) aufweist zur Energieversorgung des Zwischenkreises (3), wobei der Energieversorgungseinheit (8) von extern Energie berührungslos oder kontaktbehaftet zuführbar ist,
und dass
a) die Energieversorgungseinheit (8) eine regelbare Stromquelle und einen Stromregler umfasst, wobei ein Ausgangsstrom (I₀) auf einen Sollwert (I_{0,soll}) regelbar ist,
oder
b) die Energieversorgungseinheit (8) eine regelbare Spannungsquelle und einen ersten Spannungsregler umfasst, wobei eine Ausgangsgleichspannung (U₀) auf einen Sollwert (U_{0,soll}) für die Ausgangsgleichspannung regelbar ist.

2. Elektrisches Fahrzeug nach Anspruch 1,
**dadurch gekennzeichnet, dass**
das Fahrzeug eine Steuereinrichtung zur Steuerung der Fahrbewegung des Fahrzeugs aufweist, wobei die Steuereinrichtung mit der ersten Energiespeichereinrichtung (1) verbunden und über diese mit Energie versorgbar ist.

3. Elektrisches Fahrzeug nach einem der vorangegangenen Ansprüche,
**dadurch gekennzeichnet, dass**
die zweite Energiespeichereinrichtung (2) direkt mit dem Zwischenkreis (3) verbunden ist, wobei ein zeitlicher Gradient (dU_{ZK}/dt) der Zwischenkreisspannung (U_{ZK}) mittels eines Spannungsmessers messbar ist,
wobei die erste Wandlerrichtung (6) aktiviert ist, wenn der Gradient (dU_{ZK}/dt) positiv oder Null ist,
wobei die erste Wandlerrichtung (6) deaktiviert ist, wenn der Gradient (dU_{ZK}/dt) negativ ist.

4. Elektrisches Fahrzeug nach einem der vorangegangenen Ansprüche,
**dadurch gekennzeichnet, dass**
der Gleichspannungswandler (5) einen zweiten Spannungsregler aufweist, wobei dem zweiten Spannungsregler ein Sollwert (U_{ZK,soll}) für die Zwischenkreisspannung (U_{ZK}) vorgebbar ist, wobei der Sollwert (U_{ZK,soll}) gleich einem Zwischenkreisspannungsgrenzwert (U_{ZK,G}) ist.

5. Elektrisches Fahrzeug nach Anspruch 4,
**dadurch gekennzeichnet, dass**
der Gleichspannungswandler (5) derart eingerichtet ist, dass die zweite Wandlerrichtung (7) aktiviert ist zur Stützung der Zwischenkreisspannung (U_{ZK}), wenn die Zwischenkreisspannung (U_{ZK}) kleiner als der Zwischenkreisspannungsgrenzwert (U_{ZK,G}) ist und wenn die Speicherspannung (U_{S}) größer als eine Minimalspeicherspannung (U_{S,min}) ist.

6. Elektrisches Fahrzeug nach Anspruch 5,
**dadurch gekennzeichnet, dass**
der Gleichspannungswandler (5) derart eingerichtet ist, dass die zweite Wandlerrichtung (7) deaktiviert ist, wenn die Zwischenkreisspannung (U_{ZK}) größer als der Zwischenkreisspannungsgrenzwert (U_{ZK,G}) ist und/oder wenn die Speicherspannung (U_{S}) kleiner als die Minimalspeicherspannung (U_{S,min}) ist.

7. Elektrisches Fahrzeug nach einem der Ansprüche 4 bis 6,
**dadurch gekennzeichnet, dass**
der Gleichspannungswandler (5) derart eingerichtet ist, dass die erste Wandlerrichtung (6) aktiviert ist zur Aufladung der ersten Energiespeichereinrichtung (1), wenn die Zwischenkreisspannung (U_{ZK}) größer als der Zwischenkreisspannungsgrenzwert (U_{ZK,G}) ist und wenn die Speicherspannung (U_{S}) kleiner als eine Maximalspeicherspannung (U_{S,max}) ist.

8. Elektrisches Fahrzeug nach Anspruch 7,
**dadurch gekennzeichnet, dass**
der Gleichspannungswandler (5) derart eingerichtet ist, dass die erste Wandlerrichtung (6) deaktiviert ist, wenn die Speicherspannung (U_{S}) größer als die Maximalspeicherspannung (U_{S,max}) ist und/oder wenn die Zwischenkreisspannung (U_{ZK}) kleiner als der Zwischenkreisspannungsgrenzwert (U_{ZK,G}) ist.

9. Elektrisches Fahrzeug nach einem der vorangegangenen Ansprüche,
**dadurch gekennzeichnet, dass**
die zweite Energiespeichereinrichtung (2) derart ausgelegt ist, dass mehr Strom aufnehmbar ist als durch die Energieversorgungseinheit (8) bereitstellbar ist.

10. Elektrisches Fahrzeug nach einem der vorangegangenen Ansprüche,
**dadurch gekennzeichnet, dass**
die erste Energiespeichereinrichtung (1) derart trennbar am elektrischen Fahrzeug angeordnet ist, dass ein Austausch der ersten Energiespeichereinrichtung (1) ermöglicht ist.

11. Elektrisches Fahrzeug nach einem der vorangegangenen Ansprüche,
**dadurch gekennzeichnet, dass**
an der ersten Energiespeichereinrichtung (1) mittels einer Strommessung und/oder Spannungsmessung ein Überspannungsschutz und/oder Unterspannungsschutz und/oder Überstromschutz bereitgestellt ist.

12. Elektrisches Fahrzeug nach einem der vorangegangenen Ansprüche,
**dadurch gekennzeichnet, dass**
an der ersten Energiespeichereinrichtung (1) mittels einer Temperaturmessung ein Übertemperaturschutz bereitgestellt ist.

13. Elektrisches Fahrzeug nach einem der vorangegangenen Ansprüche,
**dadurch gekennzeichnet, dass**
an der zweiten Energiespeichereinrichtung (2) mittels einer Strommessung und/oder Spannungsmessung ein Überspannungsschutz und/oder Überstromschutz bereitgestellt ist.

14. Elektrisches Fahrzeug nach einem der vorangegangenen Ansprüche,
**dadurch gekennzeichnet, dass**
an der zweiten Energiespeichereinrichtung (2) mittels einer Temperaturmessung ein Übertemperaturschutz bereitgestellt ist.

15. Verfahren zum Betreiben eines elektrischen Fahrzeugs aufweisend:
eine elektrische Fahrantriebseinrichtung (4) für die Fahrbewegung des Fahrzeugs,
eine erste Energiespeichereinrichtung (1),
eine zweite Energiespeichereinrichtung (2), welche schneller auf- und entladbar ist als die erste Energiespeichereinrichtung (1) und
einen bidirektionalen Gleichspannungswandler (5),
wobei die elektrische Fahrantriebseinrichtung (4), der Gleichspannungswandler (5) und die zweite Energiespeichereinrichtung (2) über einen gemeinsamen Zwischenkreis (3) miteinander verbunden sind, wobei der Zwischenkreis (3) eine Zwischenkreisspannung (U_{ZK}) aufweist,
wobei die erste Energiespeichereinrichtung (1) eine Speicherspannung (U_{S}) aufweist und über den Gleichspannungswandler (5) mit dem Zwischenkreis (3) verbunden ist,
wobei die Fahrantriebseinrichtung (4) mittels der ersten Energiespeichereinrichtung (1) und/oder mittels der zweiten Energiespeichereinrichtung (2) über den Zwischenkreis (3) mit Antriebsenergie versorgt wird,
wobei die Zwischenkreisspannung (U_{ZK}) in einer ersten Wandlerrichtung (6) mittels des Gleichspannungswandlers (5) in die Speicherspannung (U_{S}) gewandelt wird zur Aufladung der ersten Energiespeichereinrichtung (1),
wobei die Speicherspannung (U_{S}) in einer zweiten Wandlerrichtung (7) mittels des Gleichspannungswandlers (5) in die Zwischenkreisspannung (U_{ZK}) gewandelt wird zur Entladung der ersten Energiespeichereinrichtung (1),
wobei bei einer Aufladung der zweiten Energiespeichereinrichtung (2) die erste Wandlerrichtung (6) aktiviert wird,
wobei bei einer Entladung der zweiten Energiespeichereinrichtung (2) die erste Wandlerrichtung (6) deaktiviert wird,
**dadurch gekennzeichnet, dass**
das Fahrzeug eine mit dem Zwischenkreis (3) verbundene Energieversorgungseinheit (8) aufweist zur Energieversorgung des Zwischenkreises (3), wobei der Energieversorgungseinheit (8) zeitabschnittsweise von extern Energie berührungslos oder kontaktbehaftet zugeführt wird, und dass
a) die Energieversorgungseinheit (8) eine regelbare Stromquelle und einen Stromregler umfasst, wobei ein Ausgangsstrom (I₀) auf einen Sollwert (I_{0,soll}) hingeregelt wird,
oder dass
b) die Energieversorgungseinheit (8) eine regelbare Spannungsquelle und einen ersten Spannungsregler umfasst, wobei eine Ausgangsgleichspannung (U₀) auf einen Sollwert (U_{0,soll}) für die Ausgangsgleichspannung hingeregelt wird.

## Claims

1. Electric vehicle comprising:
an electrical propulsion device (4) for the travelling motion of the vehicle,
a first energy storage device (1),
a second energy storage device (2), which can be charged and discharged more quickly than the first energy storage device (1), and
a bidirectional DC voltage converter (5),
the electrical propulsion device (4), the DC voltage converter (5) and the second energy storage device (2) being interconnected by means of a joint DC link (3), the DC link (3) having a DC link voltage (U_{ZK}), the first energy storage device (1) having a storage voltage (U_{S}) and being connected to the DC link (3) by means of the DC voltage converter (5),
the propulsion device (4) being able to be supplied with drive energy by means of the first energy storage device (1) and/or by means of the second energy storage device (2) via the DC link (3),
the DC link voltage (U_{ZK}) being convertible into the storage voltage (U_{S}) by means of the DC voltage converter (5) in a first converter direction (6) in order to charge the first energy storage device (1),
the storage voltage (U_{S}) being convertible into the DC link voltage (U_{ZK}) by means of the DC voltage converter (5) in a second converter direction (7) in order to discharge the first energy storage device (1),
the first converter direction (6) being activated when the second energy storage device (2) is being charged,
the first converter direction (6) being deactivated when the second energy storage device (2) is being discharged,
**characterised in that**
the vehicle has an energy supply unit (8), connected to the DC link (3), for supplying energy to the DC link (3), the energy supply unit (8) being able to be externally supplied with energy in a contactless or contact-based manner,
and **in that**
a) the energy supply unit (8) comprises a controllable current source and a current controller, an output current (I₀) being controllable towards a setpoint (I_{0,soll}), or
b) the energy supply unit (8) comprises a controllable voltage source and a first voltage controller, a DC output voltage (U₀) being controllable towards a setpoint (U_{0,soll}) for the DC output voltage.

2. Electric vehicle according to claim 1,
**characterised in that**
the vehicle has a control device for controlling the travelling motion of the vehicle, the control device being connected to the first energy storage device (1) and being able to be supplied with energy thereby.

3. Electric vehicle according to any of the preceding claims,
**characterised in that**
the second energy storage device (2) is directly connected to the DC link (3), a time gradient (dU_{ZK}/dt) of the DC link voltage (U_{ZK}) being able to be measured by means of a voltmeter, the first converter direction (6) being activated when the gradient (dU_{ZK}/dt) is either positive or zero,
the first converter direction (6) being deactivated when the gradient (dU_{ZK}/dt) is negative.

4. Electric vehicle according to any of the preceding claims,
**characterised in that**
the DC voltage converter (5) has a second voltage controller, a setpoint (U_{ZK,soll}) for the DC link voltage (U_{ZK}) being able to be specified to the second voltage controller, the setpoint (U_{ZK,soll}) being equal to a DC link voltage threshold value (U_{ZK,G}).

5. Electric vehicle according to claim 4,
**characterised in that**
the DC voltage converter (5) is set up such that the second converter direction (7) is activated in order to support the DC link voltage (U_{ZK}) when the DC link voltage (U_{ZK}) is less than the DC link voltage threshold value (U_{ZK,G}) and when the storage voltage (U_{S}) is greater than a minimum storage voltage (U_{S,min}).

6. Electric vehicle according to claim 5,
**characterised in that**
the DC voltage converter (5) is set up such that the second converter direction (7) is deactivated when the DC link voltage (U_{ZK}) is greater than the DC link voltage threshold value (U_{ZK,G}) and/or when the storage voltage (U_{S}) is less than the minimum storage voltage (U_{S,min}).

7. Electric vehicle according to any of claims 4 to 6,
**characterised in that**
the DC voltage converter (5) is set up such that the first converter direction (6) is activated in order to charge the first energy storage device (1) when the DC link voltage (U_{ZK}) is greater than the DC link voltage threshold value (U_{ZK,G}) and when the storage voltage (U_{S}) is less than a maximum storage voltage (U_{S,max}).

8. Electric vehicle according to claim 7,
**characterised in that**
the DC voltage converter (5) is set up such that the first converter direction (6) is deactivated when the storage voltage (U_{S}) is greater than the maximum storage voltage (U_{S,max}) and/or when the DC link voltage (U_{ZK}) is less than the DC link voltage threshold value (U_{ZK,G}).

9. Electric vehicle according to any of the preceding claims,
**characterised in that**
the second energy storage device (2) is configured such that more current can be absorbed than can be provided by the energy supply unit (8).

10. Electric vehicle according to any of the preceding claims,
**characterised in that**
the first energy storage device (1) is separably arranged on the electric vehicle such as to allow the first energy storage device (1) to be replaced.

11. Electric vehicle according to any of the preceding claims,
**characterised in that**
overvoltage protection and/or undervoltage protection and/or overcurrent protection is/are provided at the first energy storage device (1) by means of a current measurement and/or a voltage measurement.

12. Electric vehicle according to any of the preceding claims,
**characterised in that**
protection against overtemperature is provided at the first energy storage device (1) by means of a temperature measurement.

13. Electric vehicle according to any of the preceding claims,
**characterised in that**
overvoltage protection and/or overcurrent protection is/are provided at the second energy storage device (2) by means of a current measurement and/or a voltage measurement.

14. Electric vehicle according to any of the preceding claims,
**characterised in that**
protection against overtemperature is provided at the second energy storage device (2) by means of a temperature measurement.

15. Method for operating an electric vehicle comprising:
an electrical propulsion device (4) for the travelling motion of the vehicle,
a first energy storage device (1),
a second energy storage device (2), which can be charged and discharged more quickly than the first energy storage device (1), and
a bidirectional DC voltage converter (5),
the electrical propulsion device (4), the DC voltage converter (5) and the second energy storage device (2) being interconnected by means of a joint DC link (3), the DC link (3) having a DC link voltage (U_{ZK}), the first energy storage device (1) having a storage voltage (U_{S}) and being connected to the DC link (3) by means of the DC voltage converter (5),
the propulsion device (4) being supplied with drive energy by means of the first energy storage device (1) and/or by means of the second energy storage device (2) via the DC link (3),
the DC link voltage (U_{ZK}) being converted into the storage voltage (U_{S}) by means of the DC voltage converter (5) in a first converter direction (6) in order to charge the first energy storage device (1),
the storage voltage (U_{S}) being converted into the DC link voltage (U_{ZK}) by means of the DC voltage converter (5) in a second converter direction (7) in order to discharge the first energy storage device (1),
the first converter direction (6) being activated when the second energy storage device (2) is being charged,
the first converter direction (6) being deactivated when the second energy storage device (2) is being discharged,
**characterised in that**
the vehicle has an energy supply unit (8), connected to the DC link (3), for supplying energy to the DC link (3), the energy supply unit (8) being externally supplied with energy in a contactless or contact-based manner in time intervals, and **in that**
a) the energy supply unit (8) comprises a controllable current source and a current controller, an output current (I₀) being controllable towards a setpoint (I_{0,soll}),
or **in that**
b) the energy supply unit (8) comprises a controllable voltage source and a first voltage controller, a DC output voltage (U₀) being controllable towards a setpoint (U_{0,soll}) for the DC output voltage.

## Revendications

1. Véhicule électrique comportant :
un dispositif d'entraînement électrique de déplacement (4) pour le mouvement de déplacement du véhicule,
un premier dispositif de stockage d'énergie (1),
un second dispositif de stockage d'énergie (2), pouvant être chargé et déchargé plus rapidement que le premier dispositif de stockage d'énergie (1), et
un convertisseur bidirectionnel à courant continu (5),
où le dispositif d'entraînement électrique de déplacement (4), le convertisseur à courant continu (5) et le second dispositif de stockage d'énergie (2) sont connectés ensemble via un circuit intermédiaire commun (3), le circuit intermédiaire (3) comportant une tension du circuit intermédiaire (U_{ZK}),
où le premier dispositif de stockage d'énergie (1) comporte une tension de stockage (U_{S}) et est connecté au circuit intermédiaire (3) via le convertisseur à courant continu (5),
où le dispositif d'entraînement électrique de déplacement (4) peut être alimenté en énergie d'entraînement via le circuit intermédiaire (3) au moyen du premier dispositif de stockage d'énergie (1) et/ou du second dispositif de stockage d'énergie (2),
où la tension du circuit intermédiaire (U_{ZK}) peut être convertie, dans un premier sens de conversion (6), au moyen du convertisseur à courant continu (5), en la tension de stockage (U_{S}) pour la charge du premier dispositif de stockage d'énergie (1),
où la tension de stockage (U_{S}) peut être convertie, dans un second sens de conversion (7), au moyen du convertisseur à courant continu (5), en la tension du circuit intermédiaire (U_{ZK}) pour la décharge du premier dispositif de stockage d'énergie (1),
où, lors d'une charge du second dispositif de stockage d'énergie (2), le premier sens de conversion (6) est activé,
où, lors d'une décharge du second dispositif de stockage d'énergie (2), le premier sens de conversion (6) est désactivé,
**caractérisé en ce que**
le véhicule comporte une unité d'alimentation en énergie (8) connectée au circuit intermédiaire (3) pour l'alimentation en énergie du circuit intermédiaire (3), l'unité d'alimentation en énergie (8) pouvant être alimentée en énergie de manière sans contact ou avec contact depuis l'extérieur, et **en ce que**
a) l'unité d'alimentation en énergie (8) comprend une source de courant réglable et un régulateur de courant, où un courant de sortie (I₀) peut être régulé à une valeur de consigne (I_{0,soll}),
ou
b) l'unité d'alimentation en énergie (8) comprend une source de tension réglable et un premier régulateur de tension, où une tension continue de sortie (U₀) peut être régulée à une valeur de consigne (U_{0,soll}) pour la tension continue de sortie.

2. Véhicule électrique selon la revendication 1,
**caractérisé en ce que**
le véhicule comporte un dispositif de commande pour la commande du mouvement de déplacement du véhicule, le dispositif de commande étant connecté au premier dispositif de stockage d'énergie (1) et pouvant être alimenté en énergie via celui-ci.

3. Véhicule électrique selon l'une des revendications précédentes,
**caractérisé en ce que**
le second dispositif de stockage d'énergie (2) est connecté directement au circuit intermédiaire (3), où un gradient temporel (dU_{ZK}/dt) de la tension du circuit intermédiaire (U_{ZK}) peut être mesuré au moyen d'un voltmètre,
où le premier sens de conversion (6) est activé lorsque le gradient (dU_{ZK}/dt) est positif ou nul,
où le premier sens de conversion (6) est désactivé lorsque le gradient (dU_{ZK}/dt) est négatif.

4. Véhicule électrique selon l'une des revendications précédentes,
**caractérisé en ce que**
le convertisseur à courant continu (5) comporte un second régulateur de tension, où une valeur de consigne (U_{ZK,soll}) pour la tension du circuit intermédiaire (U_{ZK}) est prédéfinie pour le second régulateur de tension, la valeur de consigne (U_{ZK,soll}) étant égale à une valeur limite de tension du circuit intermédiaire (U_{ZK,G}).

5. Véhicule électrique selon la revendication 4,
**caractérisé en ce que**
le convertisseur à courant continu (5) est conçu de sorte que le second sens de conversion (7) est activé pour soutenir la tension du circuit intermédiaire (U_{ZK}), lorsque la tension du circuit intermédiaire (U_{ZK}) est inférieure à la valeur limite de tension du circuit intermédiaire (U_{ZK,G}) et lorsque la tension de stockage (U_{S}) est supérieure à une tension de stockage minimale (U_{S,min}).

6. Véhicule électrique selon la revendication 5, **caractérisé en ce que** le convertisseur à courant continu (5) est conçu de sorte que le second sens de conversion (7) est désactivé lorsque la tension du circuit intermédiaire (U_{ZK}) est supérieure à la valeur limite de tension du circuit intermédiaire (U_{ZK,G}) et/ou lorsque la tension de stockage (U_{S}) est inférieure à la tension de stockage minimale (U_{S,min}).

7. Véhicule électrique selon l'une des revendications 4 à 6, **caractérisé en ce que** le convertisseur à courant continu (5) est conçu de sorte que le premier sens de conversion (6) est activé pour la charge du premier dispositif de stockage d'énergie (1), lorsque la tension du circuit intermédiaire (U_{ZK}) est supérieure à la valeur limite de tension du circuit intermédiaire (U_{ZK,G}) et lorsque la tension de stockage (U_{S}) est inférieure à une tension de stockage maximale (U_{S,max}).

8. Véhicule électrique selon la revendication 7, **caractérisé en ce que** le convertisseur à courant continu (5) est conçu de sorte que le premier sens de conversion (6) est désactivé lorsque la tension de stockage (U_{S}) est supérieure à la tension de stockage maximale (U_{S,max}) et/ou lorsque la tension du circuit intermédiaire (U_{ZK}) est inférieure à la valeur limite de tension du circuit intermédiaire (U_{ZK,G}).

9. Véhicule électrique selon l'une des revendications précédentes, **caractérisé en ce que** le second dispositif de stockage d'énergie (2) est conçu de sorte que plus de courant peut être absorbé que ce qui peut être fourni par l'unité d'alimentation en énergie (8).

10. Véhicule électrique selon l'une des revendications précédentes, **caractérisé en ce que** le premier dispositif de stockage d'énergie (1) est disposé de manière amovible sur le véhicule électrique, de sorte qu'un remplacement du premier dispositif de stockage d'énergie (1) est rendu possible.

11. Véhicule électrique selon l'une des revendications précédentes, **caractérisé en ce qu'**une protection contre les surtensions et/ou une protection contre les sous-tensions et/ou une protection contre les surintensités est fournie sur le premier dispositif de stockage d'énergie (1) au moyen d'une mesure de courant et/ou d'une mesure de tension.

12. Véhicule électrique selon l'une des revendications précédentes, **caractérisé en ce qu'**une protection contre les surchauffes est fournie sur le premier dispositif de stockage d'énergie (1) au moyen d'une mesure de température.

13. Véhicule électrique selon l'une des revendications précédentes, **caractérisé en ce qu'**une protection contre les surtensions et/ou une protection contre les surintensités est fournie sur le second dispositif de stockage d'énergie (2) au moyen d'une mesure de courant et/ou d'une mesure de tension.

14. Véhicule électrique selon l'une des revendications précédentes, **caractérisé en ce qu'**une protection contre les surchauffes est fournie sur le second dispositif de stockage d'énergie (2) au moyen d'une mesure de température.

15. Procédé pour exploiter un véhicule électrique comportant :
un dispositif d'entraînement électrique de déplacement (4) pour le mouvement de déplacement du véhicule,
un premier dispositif de stockage d'énergie (1),
un second dispositif de stockage d'énergie (2), pouvant être chargé et déchargé plus rapidement que le premier dispositif de stockage d'énergie (1), et
un convertisseur bidirectionnel à courant continu (5),
où le dispositif d'entraînement électrique de déplacement (4), le convertisseur à courant continu (5) et le second dispositif de stockage d'énergie (2) sont connectés ensemble via un circuit intermédiaire commun (3), le circuit intermédiaire (3) comportant une tension du circuit intermédiaire (U_{ZK}),
où le premier dispositif de stockage d'énergie (1) comporte une tension de stockage (U_{S}) et est connecté au circuit intermédiaire (3) via le convertisseur à courant continu (5),
où le dispositif d'entraînement électrique de déplacement (4) est alimenté en énergie d'entraînement via le circuit intermédiaire (3) au moyen du premier dispositif de stockage d'énergie (1) et/ou du second dispositif de stockage d'énergie (2),
où la tension du circuit intermédiaire (U_{ZK}) est convertie, dans un premier sens de conversion (6), au moyen du convertisseur à courant continu (5), en la tension de stockage (U_{S}) pour la charge du premier dispositif de stockage d'énergie (1),
où la tension de stockage (U_{S}) est convertie, dans un second sens de conversion (7), au moyen du convertisseur à courant continu (5), en la tension du circuit intermédiaire (U_{ZK}) pour la décharge du premier dispositif de stockage d'énergie (1),
où, lors d'une charge du second dispositif de stockage d'énergie (2), le premier sens de conversion (6) est activé,
où, lors d'une décharge du second dispositif de stockage d'énergie (2), le premier sens de conversion (6) est désactivé,
**caractérisé en ce que**
le véhicule comporte une unité d'alimentation en énergie (8) connectée au circuit intermédiaire (3) pour l'alimentation en énergie du circuit intermédiaire (3), l'unité d'alimentation en énergie (8) étant alimentée en énergie de manière sans contact ou avec contact depuis l'extérieur par intervalles, et **en ce que**
a) l'unité d'alimentation en énergie (8) comprend une source de courant réglable et un régulateur de courant, où un courant de sortie (I₀) est régulé à une valeur de consigne (I_{0,soll}),
ou **en ce que**
b) l'unité d'alimentation en énergie (8) comprend une source de tension réglable et un premier régulateur de tension, où une tension continue de sortie (U₀) est régulée à une valeur de consigne (U_{0,soll}) pour la tension continue de sortie.
